Europäisches Patentamt

European Patent Office

Office européen des brevets

(11) Publication number: **0 228 900 B1**

(12)                     EUROPEAN PATENT SPECIFICATION

(45) Date of publication of patent specification: 22.05.91     (51) Int. Cl.⁵: **H04N 9/07, H04N 9/077**

(21) Application number: **86310089.7**

(22) Date of filing: **23.12.86**

(54) **Color image pickup device.**

(30) Priority: **23.12.85 JP 289993/85**

(43) Date of publication of application:
    **15.07.87 Bulletin 87/29**

(45) Publication of the grant of the patent:
    **22.05.91 Bulletin 91/21**

(84) Designated Contracting States:
    **DE FR GB**

(56) References cited:
    **US-A- 3 591 706**
    **US-A- 3 651 250**
    **US-A- 3 969 763**

    **PATENT ABSTRACTS OF JAPAN, vol. 5, no.
    23 (E-45)[695], 12th February 1981; & JP-A-55
    150 686 (HITACHI SEISAKUSHO K.K.)
    22-11-1980**

(73) Proprietor: **VICTOR COMPANY OF JAPAN,
    LIMITED**
    **12, 3-chome, Moriya-Cho Kanagawa-ku
    Yokohama-Shi Kanagawa-Ken 221(JP)**

(72) Inventor: **Takanashi, Itsuo**
    **No.3-7-12, Oomachi**
    **Kamakura-shi Kanagawa-ken(JP)**

Inventor: **Nakagaki, Shintaro**
**Shonan-Lifetown-Komayori-Danchi No.14-402
No.5450**
**Oba Fujisawa-shi§Kanagawa-ken(JP)**
Inventor: **Ichimura, Hiroshi**
**No.1-16-10, Todoroki**
**Setagaya-ku Tokyo(JP)**
Inventor: **Kuriyama, Takashi**
**Sun-Haitsu Kawahara 201 No. 1252-8 Yabe-
Cho**
**Totsuka-ku Yokohama-Shi
Kanagawa-ken(JP)**
Inventor: **Negishi, Ichiro**
**No.2-10-2, Minamirokugo**
**Ota-ku Tokyo(JP)**
Inventor: **Asakura, Tsutou Lilac-House No.301**
**No.2-177 Fujidana Nishi-ku**
**Yokohama-shi Kanagawa-ken(JP)**
Inventor: **Osada, Masaru**
**Sagamihara-Seiwa-Ryo No.1-6-17,
Komachidoori**
**Sagamihara-shi§Kanagawa-ken(JP)**

(74) Representative: **Robinson, John Stuart et al
    MARKS & CLERK 57/60 Lincoln's Inn Fields
    London WC2A 3LS(GB)**

## Description

The present invention generally relates to color image pickup devices, and more particularly to a color image pickup device which obtains a color multiplexed signal from a pickup tube provided with a color stripe filter and performs a color demodulation in a single tube color television camera, for example.

In a conventional single tube color television camera, a color multiplexed signal is obtained by performing a scan in a direction perpendicular to the longitudinal direction of stripes of a color stripe filter which comprises a repetition of green (G), cyan (C) and white (W or transparent) stripes.

However, because the scanning is performed in the direction perpendicular to the longitudinal direction of the stripes of the color stripe filter, color components obtained via the color stripe filter are multiplexed by a carrier of 4 MHz which is relatively high for one period of the color stripe filter (that is, for one group of the G, C and W stripes). Generally, noise is high in the high frequency range, and the degree of modulation of the image pickup tube is low in the high frequency range. As a result, the signal-to-noise ratio becomes poor. In addition, the image pickup tube cannot reproduce color stripes with a high fidelity, and there is a problem in that the color reproducibility is poor.

Furthermore, since the scanning is performed in the direction perpendicular to the longitudinal direction of the stripes of the color stripe filter, the color components obtained via the color stripe filter are multiplexed in the scanning direction. For this reason, the frequency band of the luminance signal becomes limited to a narrow frequency band by the color multiplexed signal (carrier), and there is a problem in that it is impossible to obtain a satisfactory horizontal resolution.

Accordingly, in order to eliminate the above described problems, a color image pickup device was previously proposed in a European Patent Application EP-A-0 207 661 filed June II, I986 in which the applicant is the same as the applicant of the present application. The proposed color image pickup device comprises an image pickup tube and a color stripe filter comprising a plurality of stripe groups each having a plurality of stripes. The color stripe filter is arranged on the image pickup tube so that a longitudinal direction of the stripes of the color stripe filter is substantially parallel to a scanning direction of the image pickup tube. Further, there is provided color multiplexed signal obtaining means for obtaining a color multiplexed signal by multiplexing color components obtained via the color stripe filter in a direction perpendicular to the scanning direction for every one stripe group.

According to the proposed color image pickup device, the scanning is performed in the longitudinal direction of the stripes of the color stripe filter. For this reason, the color components are multiplexed by a carrier having a frequency of 94.5 kHz ( = fundamental wave component frequency of I5.75 kHz × 6) which is relatively low for one period (corresponding to one horizontal scanning period of the NTSC system) of the stripe group comprising the G, C and W stripes. As a result, the signal-to-noise ratio is high. In addition, the image pickup tube can reproduce the color stripes with a high fidelity, and the color reproducibility is generally satisfactory.

Furthermore, since the scanning is performed in the longitudinal direction of the stripes of the color stripe filter, the color components obtained via the color stripe filter are not multiplexed in the horizontal direction (scanning direction). For this reason, it is possible to obtain the same resolution as in the case of a black-and-white picture, and the frequency band of the luminance signal will not be limited by the color multiplexed signal (carrier). The frequency band of the luminance signal can be made wide, and it is possible to obtain a satisfactory horizontal resolution.

However, when the color demodulation is carried out in the proposed color image pickup device, a fundamental wave component and a second harmonic wave component are generated with respect to the luminance signal. The fundamental wave component and the second harmonic wave component together with the luminance signal cause a pseudo color signal to be generated as will be described later in conjunction with the drawings, and there is a problem in that the reproduced color may not be correct because of the pseudo color signal.

JP-A-55 150 686 and US-A-3 651 250 disclose color image pickup devices comprising an image pickup tube and a color stripe filter comprising a plurality of stripe groups, each group comprising a plurality of stripes.

According to the invention, there is provided a color image pickup device as defined in the appended claim 1.

Preferred embodiments of the invention are defined in the other appended claims.

It is thus possible to provide a color image pickup device in which a color stripe filter is arranged on an image pickup tube so that a longitudinal direction of the stripes of the color stripe filter is substantially parallel to a scanning direction of the image pickup tube, and a fundamental wave component and a second harmonic wave component are extracted from an output of the color stripe filter in a filter circuit before a color multiplexed signal is obtained by multiplexing color components obtained via the color stripe filter and the filter circuit in a direction perpendicular to the scanning direction. It is thus possible to reproduce correct colors by use of a simple circuit.

The present invention will be further described, by way of example, with reference to the accompanying drawings, in which:

FIG. 1 is a system block diagram showing a previously proposed color image pickup device;

FIG. 2 is a diagram showing a portion of a color stripe filter used in the color image pickup device shown in FIG.1 and sampling points;

FIGS 3A and 3B are diagrams for explaining a write-in operation to a memory in the color image pickup device shown in FIG.1;

FIGS. 4A and 4B respectively show an input signal waveform to a color demodulating circuit in the color image pickup device shown in FIG.1 and a luminance signal waveform;

FIG.5 is a system circuit diagram showing the construction of a switching circuit within the color image pickup device shown in FIG.I;

FIGS.6(A) through 6(D) show signal waveforms for explaining the operation of the circuit system shown in FIG.5;

FIG.7 shows a frequency versus level characteristic for explaining a pseudo color signal generated in the color image pickup device shown in FIG.I;

FIG.8 is a system block diagram showing an embodiment of the color image pickup device according to the present invention;

FIGS.9A and 9B respectively show a fundamental wave component and a second harmonic wave component and a color stripe filter of the color image pickup device according to the present invention in correspondence with each other;

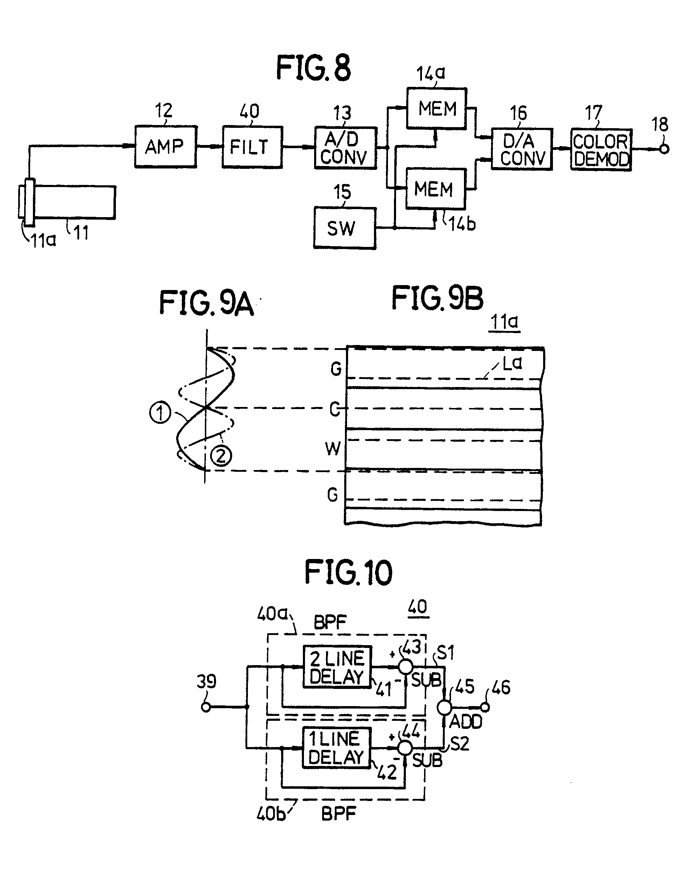

FIG.I0 shows an embodiment of a filter circuit in the color image pickup device shown in FIG.8;

FIGS.II, I2A and I2B respectively show frequency versus level characteristics for explaining a pseudo color signal generated in the color image pickup device according to the present invention; and

FIG.I3 shows another embodiment of the filter circuit in the color image pickup device shown in FIG.8.

In order to facilitate the understanding of the present invention, description will first be given on the color image pickup device previously proposed in the European Patent Application EP-A-0 207 661 referred to before.

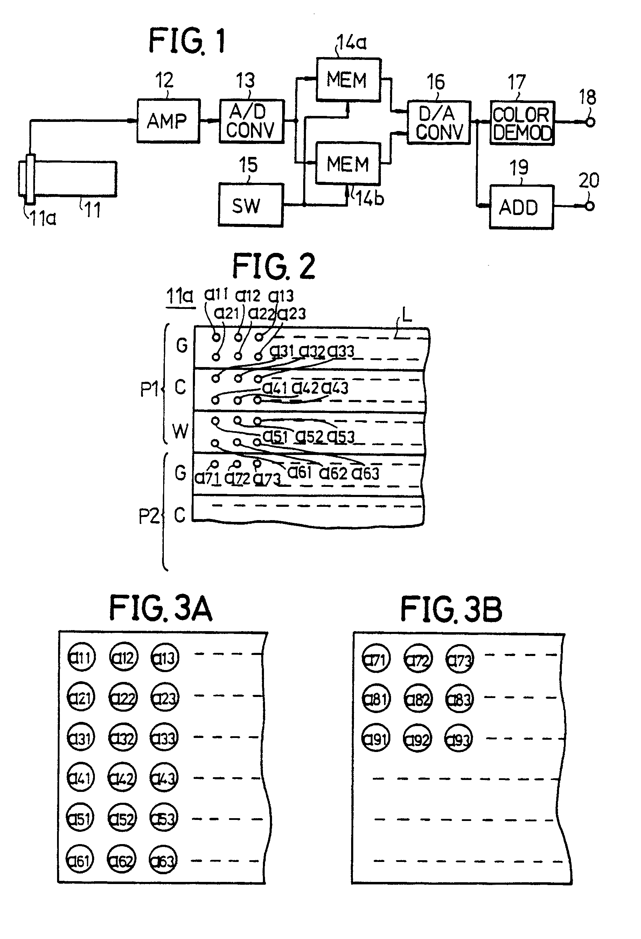

FIG.I shows the previously proposed color image pickup device, and FIG.2 shows a portion of a color stripe filter used in this device for explaining the relationship between scanning lines and sampling positions.

As shown in FIG.2, a color stripe filter 11a comprises a repetition of green (G), cyan (C) and white (W or transparent) stripes. The color image pickup device performs the scanning in a longitudinal direction of the stripes of the color stripe filter 11a. A number of scanning lines L is set to such a number that the color stripe filter 11a can reproduce the samples. For example, the number of scanning lines L for stripe group consisting of the G, C and W stripes is set to six. According to the energy step system, a fundamental wave component and a second harmonic component are to be reproduced. Thus, it may be understood from the sampling theorem that it is possible to reproduce the fundamental wave component and the second harmonic component when there are four or more scanning lines L per one stripe group.

In FIG.1, a signal obtained from an image pickup tube 11 which is provided with the color stripe filter 11a shown in FIG.2 is passed through a preamplifier 12 and is supplied to an analog-to-digital (A/D) converter 13 wherein the signal is converted into a digital signal. The output digital signal of the A/D converter 13 is supplied to field memories 14a and 14b. A control signal is supplied to the memories 14a and 14b from a switching circuit 15 so as to control write-in and read-out operations of the memories 14a and 14b.

One period of the stripe groups of the color stripe filter 11a is set to correspond to one horizontal scanning period of the television system such as the NTSC, PAL and SECAM systems. In a first horizontal scanning period, a signal from the A/D converter 13 related to a first stripe group P1 is written into the memory 14a as shown in FIG.3A in a sequence of sampled data at sampling points a11, a12, a13, ..., a21, a22, a23, ..., a31, a32, a33, ... shown in FIG.2. In other words, the sampled data related to the first stripe group P1 are successively written into the memory 14a in the sequence of the sampled data arranged in the horizontal direction. In a second horizontal scanning period, the stored sampled data related to the first stripe group P1 are successively read out from the memory 14a in a sequence of the sampled data at the sampling points a11, a21, a31, a41, a51, a61, a12, a22, a32, a42, a52, a62, a13, a23, a33, a43, a53, a63, ... . In other words, the stored sampled data are read out from the memory 14a in the sequence of the stored sampled data arranged in a direction perpendicular to the write-in direction. On the other hand, in the second horizontal scanning period, a signal from the A/D converter 13 related to a second stripe group P2 is written into the memory 14b as shown in FIG.3B in a sequence of sampled data at sampling points a71, a72, a73, ..., a81, a82, a83, ..., a91, a92, a93, ... , similarly as in the case of the write-in to the memory 14a in the first horizontal scanning period.

In a third horizontal scanning period, the stored sampled data related to the second stripe group P2 are successively read out from the memory 14b in a sequence of the sampled data at the sampling points a71, a81, a91, ..., a72, a82, a92, ..., a73, a83, a93, ... . In other words, the stored sampled data are read out from the memory 14b in the sequence of the stored sampled data arranged in a direction perpendicular to the write-in direction. Furthermore, in this third horizontal scanning period, a signal from the A/D converter 13 related to a third stripe group is newly written into the memory 14a.

Similarly thereafter, the write-in and read-out operations are alternately performed in the memories 14a and 14b for the signal related to each stripe group, and such operations are repeated. As a result, the write-in and read-out operations are performed for each stripe group, that is, for each horizontal scanning period. The signals read out from the memories 14a and 14b for every one horizontal scanning period of the NTSC system are supplied to a digital-to-analog (D/A) converter 16 wherein the signals are converted into an analog signal.

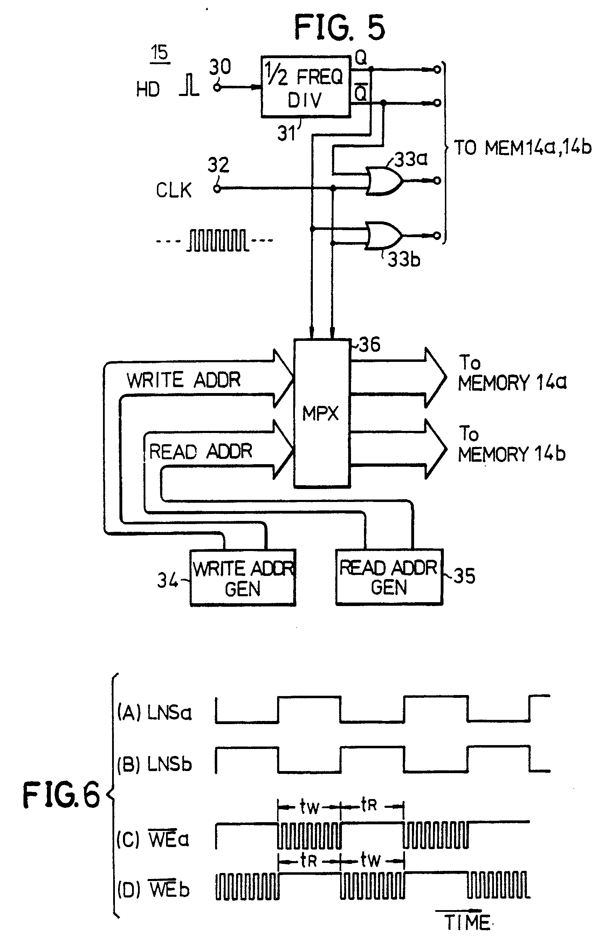

The switching circuit 15 may have a construction shown in FIG.5. In FIG.5, a horizontal synchronizing signal HD is applied to a terminal 30 and is supplied to a 1/2 frequency divider 31 wherein the signal is frequency-divided by 1/2. As a result, signals LNSa and LNSb shown in FIGS.6(A) and 6-(B) are obtained from the frequency divider 31. On the other hand, a clock signal CLK is applied to a terminal 32 is supplied to OR gates 33a and 33b which are respectively supplied with the signals LNSa and LNSb. Hence, write-in and read-out control signals $\overline{WEa}$ and $\overline{WEb}$ shown in FIGS.6(C) and 6(D) are obtained from the OR gates 33a and 33b.

A write-in address generated by a write-in address generator 34 and a read-out address generated by a read-out address generator 35 are supplied to a multiplexer 36. This multiplexer 36 is also supplied with the output signals LNSa and LNSb of the frequency divider 31. Hence, the multiplexer 36 alternately produces the write-in address and the read-out address with a period of one horizontal scanning period, in synchronism with the timing of the signal LNSa, for example. The output address of the multiplexer 36 is supplied to the memories 14a and 14b.

Accordingly, during a time period $t_W$ shown in FIG.6(C), for example, the memory 14a performs a write-in operation responsive to the control signal $\overline{WEa}$ to write data at a write-in address. During a next time period $t_R$ shown in FIG.6(C), the memory 14a performs a read-out operation responsive to the control signal $\overline{WEb}$ to read out stored data from a read-out address. The memory 14a alternately performs the write-in operation and the read-out operation for every one horizontal scanning period, and such write-in and read-out operations are repeated. On the other hand, the memory 14b performs the write-in and read-out operations similarly as in the case of the memory 14a, except that the memory 14b performs the read-out operation while the memory 14a performs the write-in operation and performs the write-in operation while the memory 14a performs the read-out operation.

The signals LNSa and LNSb from the frequency divider 31 are also supplied to data latch circuits (not shown) which are respectively provided at input and output stages of the memories 14a and 14b, so as to control the timings of input and output data of the memories 14a and 14b to regular timings.

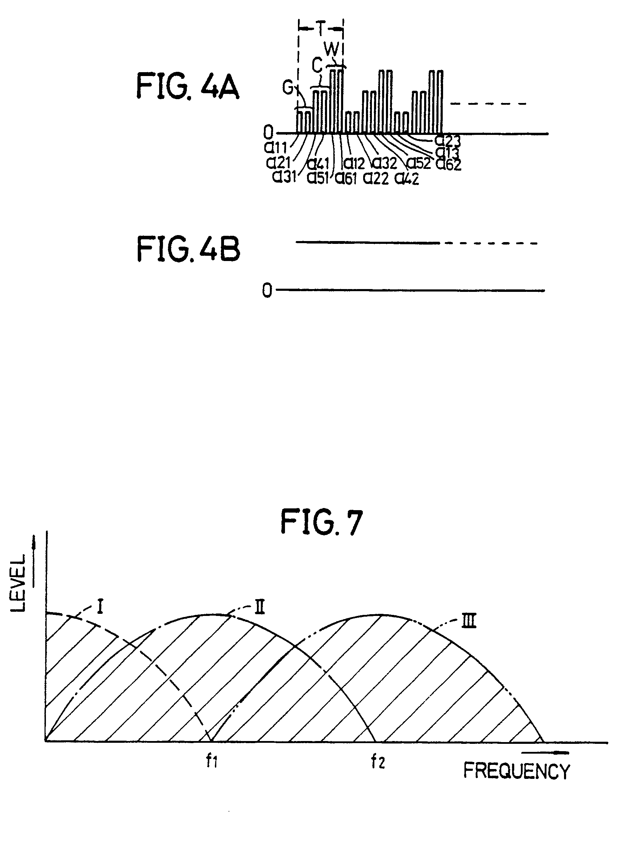

The output signal of the D/A converter 16 comprises the data of each stripe group arranged on the time base as shown in FIG.4A. This signal shown in FIG.4A is similar to a color multiplexed signal obtained in accordance with the general energy step system. When the sampling theorem is satisfied, the output signal of the D/A converter 16 becomes similar to the color multiplexed signal obtained by multiplexing the color components according to the energy step system, and it is possible to reproduce a fundamental wave component signal and a second harmonic wave component signal with a high fidelity even when the sampling phase and frequency change.

The output signal of the D/A converter 16 is supplied to a color demodulating circuit 17 which has a construction similar to a color demodulating circuit used in the case of the energy step system, and is subjected to a color demodulation. An output signal of the color demodulating circuit 17 is obtained via an output terminal 18.

On the other hand, the output signal of the D/A converter 16 is also supplied to an adder 19 wherein the data of one stripe group are added for each of the stripe groups, and a luminance signal shown in FIG.4B is produced from the adder 19. The output luminance signal of the adder 19 is obtained via an output terminal 20.

According to the proposed color image pickup device, the scanning is performed in the longitudinal direction of the stripes of the color stripe filter 11a. For this reason, the color components are multiplexed by a carrier having a frequency of 94.5 kHz ( = fundamental wave component frequency of 15.75 kHz × 6) which is relatively low for one period (corresponding to one horizontal scanning period of the NTSC system, for example) of the stripe group comprising the G, C and W stripes. As a result, the signal-to-noise ratio is high. In addition, the image pickup tube can reproduce the color stripes with a high fidelity, and the color reproducibility is generally satisfactory.

Furthermore, since the scanning is performed in the longitudinal direction of the stripes of the color stripe filter 11a, the color components obtained via the color stripe filter 11a are not multiplexed in the horizontal direction (scanning direction). For this reason, it is possible to obtain the same resolution as in the case of a black-and-white picture, and the frequency band of the luminance signal will not be limited by the color multiplexed signal (carrier). The frequency band of the luminance signal can be made wide, and it is possible to obtain a satisfactory horizontal resolution.

In this case, the color stripe filter 11a comprises 240 stripe groups (corresponding to one field of the NTSC system). When it is assumed that the vertical resolution for one stripe group is two television scanning lines, the vertical resolution as a whole is 480 television scanning lines, and the vertical resolution is the same as that of the conventional image pickup device.

In the case where the image pickup tube is designed to scan in the vertical direction, the color stripe filter should be arranged so that longitudinal direction of the stripes of the color stripe filter coincides with the vertical direction. In this case, the write-in to the memories 14a and 14b is performed in a sequence of the data arranged in the vertical direction and the read-out from the memories 14a and 14b is performed in a direction perpendicular to the write-in direction, that is, in the horizontal direction.

In addition, the color multiplexed signal is obtained for each of the stripe groups arranged in the direction perpendicular to the scanning direction. For this reason, the sampled data can be written into and read out from the memories for every one horizontal scanning period of the NTSC system, for example, and it is unnecessary to provide special means for dividing the sampled data read out from the memories into a data group for every one horizontal scanning period. Consequently, the memory capacities of the memories do not need to be extremely large.

However, when the color demodulation is carried out in the proposed color image pickup device, a fundamental wave component II and a second harmonic wave component III are generated with respect to a luminance signal I as shown in FIG.7. The fundamental wave component II and the second harmonic wave component III together with the luminance signal I cause a pseudo color signal to be generated in a range indicated by hatchings in FIG.7, and there is a problem in that the reproduced color may not be correct because of the pseudo color signal.

The present invention extracts the fundamental wave component and the second harmonic wave component before obtaining the color multiplexed signal, so that it is possible to reproduce correct colors.

FIG.8 shows an embodiment of the color image pickup device according to the present invention. In FIG.8, those parts which are the same as those corresponding parts in FIG.1 are designated by the same reference numerals, and description thereof will be omitted.

In FIG.8, a filter circuit 40 is provided between the preamplifier 12 and the A/D converter 13. As will be described later in conjunction with FIG.10, the filter circuit 40 comprises bandpass filters 40a and 40b. The image pickup tube 11 comprises the color stripe filter 11a shown in FIG.9B, and the number of scanning lines La for one stripe group consisting of the G, C and W stripes is set to four in the present embodiment.

The relationships of the filter stripes of the color stripe filter 11a with the fundamental wave component and the second harmonic wave component are shown in FIGS.9A and 9B. One period of the fundamental wave component corresponds to one stripe group consisting of the G, C and W stripes as indicated by a solid line ① in FIG.9A. Two periods of the second harmonic wave component correspond to one stripe group consisting of the G, C and W stripes as indicated by a phantom line ② in FIG.9A. Thus, as may be seen from FIGS.9A and 9B, an interval between two successive scanning lines corresponds to a $90^\circ$ phase angle of the fundamental wave component, and this interval between two successive scanning lines corresponds to a $180^\circ$ phase angle of the second harmonic wave component.

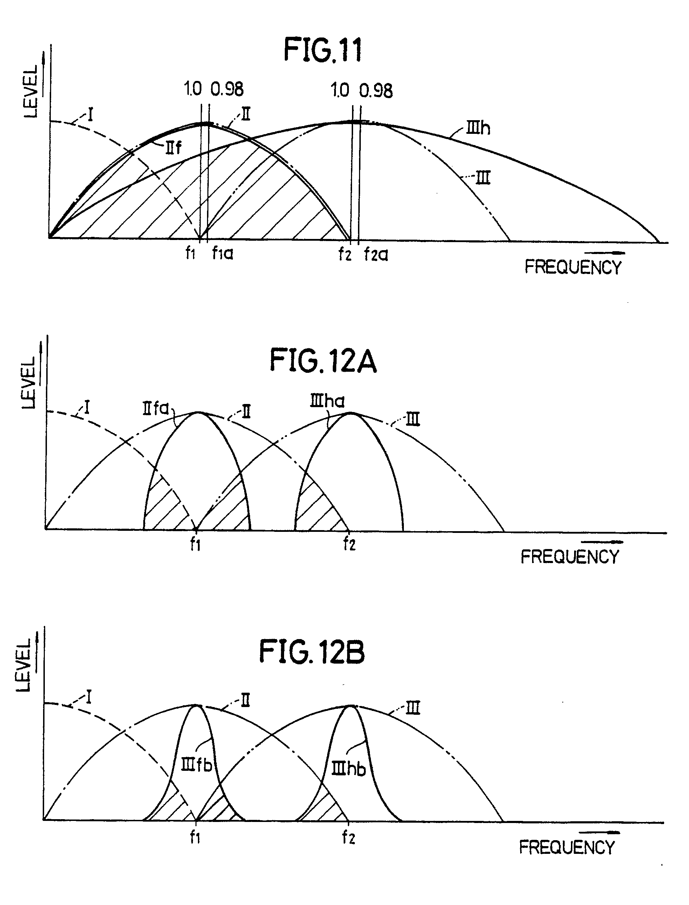

FIG.10 shows an embodiment of the filter circuit 40. The filter circuit 40 comprises the bandpass filters 40a and 40b and an adder 45. The bandpass filter 40a comprises a two scanning line delay circuit 41 and a subtracting circuit 43. The delay circuit 41 delays the output of the preamplifier 12 obtained via a terminal 39 by two scanning lines, and the subtracting circuit 43 subtracts from a delayed output of the delay circuit 41 the output of the preamplifier 12 (that is, the input of the delay circuit 41). Hence, as may be readily understood from FIGS.9A and 9B, a fundamental wave component sl is obtained from the subtracting circuit 43 in a frequency band IIf indicated by a solid line about a frequency fl as shown in FIG.11. On the other hand, the bandpass filter 40b comprises a one scanning line delay circuit 42 and a subtracting circuit 44. The delay circuit 42 delays the output of the preamplifier 12 obtained via the terminal 39 by one scanning line, and the subtracting circuit 44 subtracts from a delayed output of the delay circuit 42 the output of the preamplifier 12 (that is, the input of the delay circuit 42). Hence, as may be readily understood from FIGS.9A and 9B, a second harmonic wave component s2 is obtained from the subtracting circuit 44 in a frequency band IIIh indicated by a solid line about a frequency f2 as shown in FIG.11. In other words, in each of the bandpass filters 40a and 40b, the desired component is obtained by carrying out an operation between signals having a $180°$ phase difference. The fundamental wave component s1 and the second harmonic wave component s2 are added in the adder 45 and an added signal is supplied to the A/D converter 13 shown in FIG.8 via a terminal 46.

By providing the filter circuit 40, it is possible to extract from the output of the preamplifier 12 only the fundamental wave component II in the frequency band IIf and the second harmonic wave component III in the frequency band IIIh shown in FIG.11. The characteristic of the luminance signal is indicated by a phantom line I. As a result, the pseudo color signal is only generated in a range indicated by hatchings in FIG.11, and it can be readily seen that the effects of the pseudo color signal can be reduced considerably in the present embodiment when compared to the case shown in FIG.7 described before. Therefore, it is possible to reproduce correct colors according to the present embodiment.

It is possible to arbitrarily select the frequency bands in which the fundamental wave component and the second harmonic wave component are to be obtained by using feedback type filters for the bandpass filters 40a and 40b. In the case where frequency bands IIfa and IIIha shown in FIG.12A are selected for the fundamental wave component and the second harmonic wave component, respectively, the pseudo color signal is only generated in a range indicated by hatchings. On the other hand, in the case where frequency bands IIfb and IIIhb shown in FIG.12B are selected for the fundamental wave component and the second harmonic wave component, respectively, the pseudo color signal is only generated in a range indicated by hatchings. It can be seen from FIGS.12A and 12B that the effects of the pseudo color signal can further be reduced by use of the feedback type filters compared to the case shown in FIG.11.

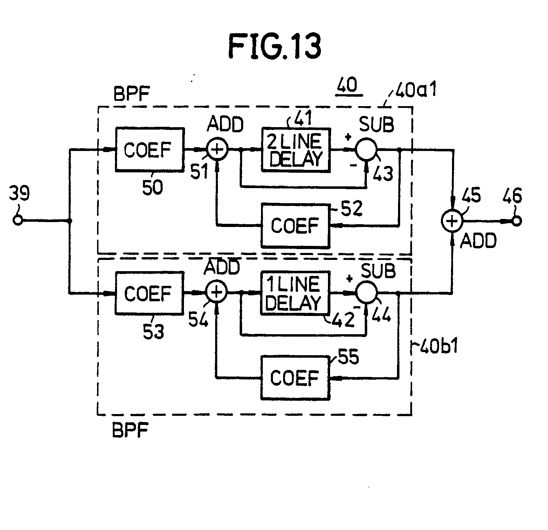

FIG.13 shows an embodiment of the filter circuit 40 using feedback type filters for the bandpass filters 40a and 40b. In FIG.13, those parts which are the same as those corresponding parts in FIG.10 are designated by the same reference numerals, and description thereof will be omitted.

In FIG.13, the filter circuit 40 comprises feedback type filters 40aI and 40bI and the adder 45. The feedback type filter 40aI comprises a coefficient multiplier 50 for multiplying a coefficient $1-\beta$, an adder 51, the two scanning line delay circuit 41, the subtracting circuit 43 and a coefficient multiplier 52 for multiplying a coefficient $\beta$. For example, the coefficient $\beta$ is selected in a range of zero to one. The output of the preamplifier 12 shown in FIG.8 is obtained from the terminal 39 and is supplied to the adder 51 via the coefficient multiplier 50. An output of the adder 51 is supplied to the subtracting circuit 43 via the two scanning line delay circuit 41, and the subtracting circuit 43 subtracts the input of the two scanning line delay circuit 41 from the output of the two scanning line delay circuit 41. The output of the subtracting circuit 43 is fed back to the adder 51 via the coefficient multiplier 52. The feedback type filter 40bI has a construction similar to the feedback type filter 40aI, and comprises a coefficient multiplier 53, an adder 54, the one scanning line delay circuit 42, the subtracting circuit 44 and a coefficient multiplier 55. The adder 45 adds the outputs of the subtracting circuits 43 and 44, and the output of the adder 45 is supplied to the A/D converter 13 shown in FIG.8 via the terminal 46. By appropriately selecting the coefficients of the coefficient multipliers 50, 52, 53 and 55, it is possible to select the frequency bands in which the fundamental wave component and the second harmonic wave component are to be obtained, such as the frequency bands IIfa and IIIha or IIfb and IIIhb shown in FIGS.12A and 12B.

The number of scanning lines La for one stripe group consisting of the G, C and W stripes is not limited to four. In a modification of the embodiment of the invention described before, the number of scanning lines La for one stripe group may be set to 3.5, for example. In this case, an interval between two successive scanning lines corresponds to a $102.8°$ ($= 360°/3.5$) phase angle of the fundamental wave component, and this interval between two successive scanning lines corresponds to a $205.6°$ ($=720°/3.5$) phase angle of the second harmonic wave component. As a result, the fundamental wave component and the second harmonic wave component no longer have the $180°$ phase relationship, and the respective center frequencies f1 and f2 of the fundamental wave component and the second harmonic wave component shift to frequencies f1a and f2a shown in FIG.11. However, the shifts are small in that when the level is assumed to be 1.0 at the center frequency f1 of the fundamental wave component II and at the center frequency f2 of the second harmonic wave component III, the level at the respective shifted center frequencies f1a and f2a of the fundamental wave component II and the second harmonic wave component III is 0.98 and is extremely close to 1.0. Hence, the passbands IIf and IIIh of the bandpass filters 40a and 40b shown in FIG.10 only change slightly by such small shifts in the center frequencies, and no inconveniences will be introduced even when the circuit shown in FIG.10 is used for the case where the number of scanning lines La for one stripe group is set to 3.5, for example.

In the embodiments described heretofore, the television system is not limited to the NTSC system. Furthermore, the number of stripe groups may be set arbitrarily according to the needs.

In the case where the image pickup tube is designed to scan in the vertical direction, the color stripe filter should be arranged so that the longitudinal direction of the stripes of the color stripe filter coincides with the vertical direction. In this case, the write-in to the memories 14a and 14b is performed in a sequence of the data arranged in the vertical direction and the read-out from the memories 14a and 14b is performed in a direction perpendicular to the write-in direction, that is, in the horizontal direction.

According to the present invention, the color components are multiplexed by a carrier having a relatively low carrier frequency because the image pickup tube scans in a direction substantially parallel to the longitudinal direction of the stripes of the color stripe filter. For this reason, it is possible to obtain a high signal-to-noise ratio and to obtain a satisfactory color reproducibility. In addition, it is possible to have a wide frequency band for the luminance signal and to obtain a satisfactory horizontal resolution. Moreover, since the fundamental wave component and the second harmonic wave component are extracted by use of the filter circuit, it is possible to effectively reduce the generation of the pseudo color signal and accordingly reproduce correct colors.

## Claims

1. A color image pickup device comprising an image pickup tube (11) and a color stripe filter (11a) comprising a plurality of stripe groups, each stripe group comprising a plurality of stripes, and color multiplexed signal obtaining means (13, 14a, 14b, 15, 16) for obtaining a color multiplexed signal by multiplexing color components obtained via said color stripe filter and said filter circuit in a direction perpendicular to said scanning direction for every one stripe group, said color stripe filter (11a) being arranged on said image pickup tube (11) so that a longitudinal direction of the stripes of said color stripe filter is substantially parallel to a scanning direction of said image pickup tube, and characterized in that there is provided a filter circuit (40) for extracting a fundamental wave component and a second harmonic wave component from an output of the color stripe filter.

2. A color image pickup device as claimed in claim 1, characterized in that said filter circuit comprises a first bandpass filter (40a, 40a1) for extracting the fundamental wave component from the output of said color stripe filter, a second bandpass filter (40b, 40b1) for extracting the second harmonic wave component from the output of said color stripe filter, and an adder (45) for adding the outputs of said first and second bandpass filters.

3. A color image pickup device as claimed in claim 2, characterized in that said first bandpass filter (40a) comprises a first delay circuit (41) for delaying the output of said color stripe filter by a first delay time and a first subtracting circuit (43) for subtracting the output of said color stripe filter from an output of said first delay circuit, and said second bandpass filter (40b) comprises a second delay circuit (42) for delaying the output of said color stripe filter by a second delay time and a second subtracting circuit (44) for subtracting the output of said color stripe filter from an output of said second delay circuit, outputs of said first and second subtracting circuits being supplied to said adder as the outputs of said first and second bandpass filters, said first and second delay times being set so that said first and second subtracting circuits perform subtraction between signals having a phase difference of approximately $180°$.

4. A color image pickup device as claimed in claim 3, characterized in that each stripe group of said color stripe filter comprises a green stripe, a cyan stripe and a transparent stripe, said image pickup tube having approximately four scanning lines per one stripe group, said first delay time being set to two scanning line, said second delay time being set to one scanning line.

5. A color image pickup device as claimed in claim 2, characterized in that said first and second bandpass filters (40a1, 40b1) are constituted by feedback type filters.

6. A color image pickup device as claimed in claim 5, characterized in that said first bandpass filter (40a1) comprises a first coefficient multiplier (50) supplied with the output of said color stripe filter, a first adding circuit (51) supplied with an output of said first coefficient multiplier, a first delay circuit (41) supplied with an output of said first adding circuit, a first subtracting circuit (43) for subtracting the output of said first adding circuit from an output of said first delay circuit and a second coefficient multiplier (52) supplied with an output of said first subtracting circuit and for supplying an output thereof to said first adding circuit, said second bandpass filter (40bl) comprises a third coefficient multiplier (53) supplied with the output of said color stripe filter, a second adding circuit (54) supplied with an output of said third coefficient multiplier, a second delay circuit (42) supplied with an output of said second adding circuit, a second subtracting circuit (44) for subtracting the output of said second adding circuit from an output of said second delay circuit and a fourth coefficient multiplier (55) supplied with an output of said second subtracting circuit and for supplying an output thereof to said second adding circuit, the outputs of said first and second subtracting circuits being supplied to said adder (45) as the outputs of said first and second bandpass filters, first and second delay times of said first and second delay circuits being set so that said first and second subtracting circuits perform subtraction between signals having a phase difference of approximately 180°.

7. A color image pickup device as claimed in claim 6, characterized in that each stripe group of said color stripe filter comprises a green stripe, a cyan stripe and a transparent stripe, said image pickup tube having approximately four scanning lines per one stripe group, said first delay time being set to two scanning line, said second delay time being set to one scanning line.

8. A color image pickup device as claimed in claim I, characterized in that each stripe group of said color stripe filter comprises a green stripe, a cyan stripe and a transparent stripe.

9. A color image pickup device as claimed in claim 8, characterized in that said image pickup tube has approximately four scanning lines per one stripe group.

10. A color image pickup device as claimed in claim 1, characterized in that said color multiplexed signal obtaining means comprises an analog-to-digital converter (l3) for subjecting the output of said image pickup tube obtained via said filter circuit to an analog-to-digital conversion, memory means (14a, 14b) for writing therein an output signal of said analog-to-digital converter in a sequence of data arranged in said scanning direction for every one stripe group and for reading out therefrom the stored signal in a sequence of data arranged in a direction perpendicular to said scanning direction for every one stripe group, and a digital-to-analog converter (l6) for subjecting an output of said memory means to a digital-to-analog conversion so as to produce the color multiplexed signal.

11. A color image pickup device as claimed in claim 1, characterized in that there is further provided color demodulating means (l7) for producing a color demodulated signal by subjecting said color multiplexed signal to a color demodulation.

12. A color image pickup device as claimed in claim 11, characterized in that said color demodulating means comprises a color demodulating circuit employing a step energy system.

**Revendications**

1. Dispositif capteur d'images en couleurs comportant un tube capteur d'images (11) et un filtre à bandes de couleurs (11a) comportant plusieurs groupes de bandes, chaque groupe de bandes comportant plusieurs bandes, et des moyens d'obtention d'un signal de couleurs multiplexé (13, 14a, 14b, 15, 16) destinés à obtenir un signal de couleurs multiplexé en multiplexant des composantes chromatiques obtenues par l'intermédiaire du dit filtre à bandes de couleurs et du dit circuit de filtrage dans une direction perpendiculaire à la dite direction de balayage pour chaque groupe de bandes, le dit filtre à bandes de couleurs (11a) étant disposé sur le dit tube capteur d'images (11) de telle sorte qu'une direction longitudinale des bandes du dit filtre à bandes de couleurs est sensiblement parallèle à une direction de balayage du dit tube capteur d'images, et caractérisé en ce qu'il est prévu un circuit de filtrage (40) destiné à extraire une composante d'onde fondamentale et une composante d'onde deuxième harmonique d'une sortie du filtre à bandes de couleur.

2. Dispositif capteur d'images selon la revendication 1, caractérisé en ce que le circuit de filtrage (40) comprend un premier filtre passe-bande (40a, 40a1) pour extraire la composante d'onde fondamentale du signal de sortie du filtre à bandes de couleurs (11a), un deuxième filtre passe-bande (40b, 40b1) pour extraire la composante d'onde deuxième harmonique du signal de sortie du filtre à bandes de couleurs (11a) et un additionneur pour additionner les signaux de sortie du premier et du deuxième filtre passebande (40a, 40a1 ; 40b, 40b1).

3. Dispositif capteur d'images en couleurs selon la revendication 2, caractérisé en ce que le premier filtre passe-bande (40a) comprend un premier circuit à retard (41) pour retarder le signal de sortie du filtre à bandes de couleurs (11a) de la valeur d'un premier temps de retard et un premier circuit de soustraction (43) pour soustraire le signal de sortie du filtre à bandes de couleurs (11a) d'un signal de sortie du premier circuit à retard (41), et le deuxième filtre passe-bande (40b) comprend un deuxième circuit à retard (42) pour retarder le signal de sortie du filtre à bandes de couleurs (11a) de la valeur d'un deuxième temps de retard et un deuxième circuit de soustraction (44) pour soustraire le signal de sortie du filtre à bandes de couleurs (11a) d'un signal de sortie du deuxième circuit à retard (42), les signaux de sortie des premier et deuxième circuits de soustraction (43 ; 44) étant appliqués à l'additionneur (45) comme signaux de sortie des premier et deuxième filtres passe-bande (40a, 40b), lesdits premier et deuxième temps de retard étant fixés de telle manière que les premier et deuxième circuits de soustraction (43 ; 44) effectuent la soustraction entre les signaux ayant une différence de phase d'environ 180°.

4. Dispositif capteur d'images en couleurs selon la revendication 3, caractérisé en ce que chaque groupe de bandes de couleurs du filtre à bandes de couleurs (11a) comprend une bande verte, une bande bleuvert (cyan) et une bande transparente, ce tube capteur d'images ayant approximativement quatre lignes d'exploration par groupe de bandes, ledit premier temps de retard étant fixé égal à deux temps d'exploration d'une ligne et ledit deuxième temps de retard étant fixé égal à un temps d'exploration d'une ligne.

5. Dispositif capteur d'images en couleurs selon la revendication 2, caractérisé en ce que les premier et deuxième filtres passe-bande (40a1 ; 40b1) sont des filtres du type à réaction.

6. Dispositif capteur d'images en couleurs selon la revendication 5, caractérisé en ce que le premier filtre passe-bande (40a1) comprend un premier multiplieur de coefficient (50) qui reçoit le signal de sortie du filtre à bandes de couleurs (11a), un premier circuit d'addition (51) qui reçoit un signal de sortie de ce premier multiplieur de coefficient (50), un premier circuit à retard (41) qui reçoit un signal de sortie du premier circuit d'addition (51), un premier circuit de soustraction (43) pour soustraire le signal de sortie du premier circuit d'addition (51) d'un signal de sortie du premier circuit à retard (41) et un deuxième multiplieur de coefficient (52) qui reçoit un signal de sortie du premier circuit de soustraction pour fournir un signal de sortie au premier circuit d'addition (51), le deuxième filtre passe-bande (40b1) comprend un troisième multiplieur de coefficient (53) qui reçoit le signal de sortie du filtre à bandes de couleurs (11a), un deuxième circuit d'addition (54) qui reçoit un signal de sortie du troisième multiplieur de coefficient (53), un deuxième circuit de retard (42) qui reçoit un signal de sortie du deuxième circuit d'addition (54), un deuxième circuit de soustraction (44) pour soustraire le signal de sortie du deuxième circuit d'addition (54) d'un signal de sortie du deuxième circuit à retard (42) et un quatrième multiplieur de coefficient (55) qui reçoit un signal de sortie du deuxième circuit de soustraction (44) pour fournir un signal de sortie au deuxième circuit d'addition (54), les signaux de sortie des premier et deuxième circuits de soustraction (43, 44) étant appliqués à l'additionneur (45) comme signaux de sortie des premier et deuxième filtres passe-bande (40a ; 40b), les premier et deuxième temps de retard des premier et deuxième circuits à retard (41 ; 42) étant fixés de telle manière que les premier et deuxième circuits de soustraction (43 ; 44) effectuent la soustraction entre des signaux ayant une différence de phase d'environ 180°.

7. Dispositif capteur d'images en couleurs selon la revendication 6, caractérisé en ce que chaque groupe de bandes de couleurs du filtre à bandes de couleurs (11a) comprend une bande verte, une bande bleuvert (cyan) et une bande transparente, ce tube capteur d'images ayant approximativement quatre lignes d'exploration par groupe de bandes, ledit premier temps de retard étant fixé égal à deux temps d'exploration d'une ligne et ledit deuxième temps de retard étant fixé égal à un temps d'exploration d'une ligne.

8. Dispositif capteur d'images en couleurs selon la revendication 1, caractérisé en ce que chaque groupe de bandes de couleurs du filtre à bandes de couleurs (11a) comprend une bande verte, une bande bleuvert (cyan) et une bande transparente.

9. Dispositif capteur d'images en couleurs selon la revendication 8, caractérisé en ce que ce tube capteur d'images a environ quatre lignes d'exploration par groupe de bandes de couleurs.

10. Dispositif capteur d'images en couleurs selon la revendication 1, caractérisé en ce que les moyens d'obtention d'un signal de couleurs multiplexé (13, 14a, 14b, 15, 16) comprennent un convertisseur analogique-numérique (13) pour soumettre le signal de sortie du tube capteur d'images (11) obtenu par l'intermédiaire du circuit de filtrage (40), à une conversion d'analogique en numérique, des moyens de mémoire (14a, 14b) pour mémoriser dans ces mémoires un signal de sortie du convertisseur analogique-numérique (13) en une suite de données ordonnées dans la direction d'exploration pour chaque groupe de bandes de couleurs et pour lire dans ces moyens de mémoire (14a, 14b) le signal mémorisé, en une suite de données ordonnées dans une direction perpendiculaire à ladite direction d'exploration pour chaque groupe de bandes de couleurs, et un convertisseur numérique-analogique (16) pour soumettre un signal de sortie des moyens de mémoire (14a, 14b) à une conversion de numérique en analogique de manière à produire le signal de couleurs multiplexé.

11. Dispositif capteur d'images en couleurs selon la revendication 1, caractérisé en ce qu'il est en outre prévu des moyens de démodulation du signal de couleurs (17) pour produire un signal de couleurs démodulé en soumettant ledit signal de couleurs multiplexé à une démodulation de couleurs.

12. Dispositif capteur d'images en couleurs selon la revendication 11, caractérisé en ce que les moyens de démodulation de couleurs (17) comprennent un circuit démodulateur utilisant un système à énergie par paliers.

**Ansprüche**

1. Farbbildaufnahmeeinrichtung, aufweisend eine Bildaufnahmeröhre (11) und ein Farbstreifenfilter (11a), das mehrere Streifengruppen aufweist, wobei jede Streifengruppe mehrere Streifen umfaßt, und eine Einrichtung (13, 14a, 14b, 15, 16) zum Gewinnen eines Farbmultiplexsignals zur Bereitstellung eines Farbmultiplexsignals durch Multiplexen der über das Farbstreifenfilter und die Filterschaltung gelieferten Farbkomponenten in einer Richtung senkrecht zur Abtastrichtung für eine jede Streifengruppe welches Farbstreifenfilter (11a) auf der Bildaufnahmeröhre (11) derart angeordnet ist, daß eine Längsrichtung der Streifen des Farbstreifenfilters im wesentlichen parallel zu einer Abtastrichtung der Bildaufnahmeröhre liegt; und dadurch gekennzeichnet, daß eine Filterschaltung (40) zum Extrahieren einer Fundamentalwellenkomponente aus einem Ausgangssignal des Farbstreifenfilters vorgesehen ist.

2. Farbbildaufnahmeeinrichtung nach Anspruch 1, **dadurch gekennzeichnet,** daß die Filterschaltung ein erstes Bandpaßfilter (40a, 40a1) zum Extrahieren der Fundamentalwellenkomponente aus dem Ausgangssignal des Farbstreifenfilters, ein zweites Bandpaßfilter (40b, 40b1) zum Extrahieren der zweiten harmonischen Wellenkomponente aus dem Ausgangssignal des Farbstreifenfilters und einen Addierer (45) zum Addieren der Ausgangssignale des ersten und zweiten Bandpaßfilters aufweist.

3. Farbbildaufnahmeeinrichtung nach Anspruch 2, **dadurch gekennzeichnet,** daß das erste Bandpaßfilter (40a) eine erste Verzögerungsschaltung (41) zum Verzögern des Ausgangssignals des Farbstreifenfilters um eine erste Verzögerungszeit und eine erste Subtrahierschaltung (43) zum Subtrahieren des Ausgangssignals des Farbstreifenfilters von einem Ausgangssignal der ersten Verzögerungsschaltung aufweist und daß das zweite Bandpaßfilter (40b) eine zweite Verzögerungsschaltung (42) zum Verzögern des Ausgangssignals vom Farbstreifenfilter um eine zweite Verzögerungszeit und eine zweite Subtrahierschaltung (44) zum Subtrahieren des Ausgangssignals des Farbstreifenfilters von einem Ausgangssignal der zweiten Verzögerungsschaltung aufweist, wobei die Ausgangssignale der ersten und zweiten Subtrahierschaltung dem Addierer als die Ausgangssignale des ersten und zweiten Bandpaßfilters zugeführt werden und wobei die erste und zweite Verzögerungszeit so eingestellt sind, daß die erste und zweite Subtrahierschaltung eine Subtraktion zwischen Signalen ausführen, die eine Phasendifferenz von angenähert 180° aufweisen.

4. Farbbildaufnahmeeinrichtung nach Anspruch 3, **dadurch gekennzeichnet,** daß jede Streifengruppe des Farbstreifenfilters einen grünen Streifen, einen Zyanstreifen und einen transparenten Streifen aufweist, wobei die Bildaufnahmeröhre angenähert vier Abtastzeilen jeweils für eine Streifengruppe aufweist, wobei die erste Verzögerungszeit auf zwei Abtastzeilen eingestellt ist und wobei die zweite Verzögerungszeit auf eine Abtastzeile eingestellt ist.

5. Farbbildaufnahmeeinrichtung nach Anspruch 2, **dadurch gekennzeichnet,** daß das erste und zweite Bandpaßfilter (40a1, 40b1) aus Rückkopplungsfiltern aufgebaut sind.

6. Farbbildaufnahmeeinrichtung nach Anspruch 5, **dadurch gekennzeichnet,** daß das erste Bandpaßfilter (40a1) einen ersten Koeffizientenmultiplikator (50), dem das Ausgangssignal des Farbstreifenfilters zugeführt wird, eine erste Addierschaltung (51), der ein Ausgangssignal des ersten Koeffizientenmultiplikators zugeführt wird, eine erste Verzögerungsschaltung (41), der ein Ausgangssignal der ersten Addierschaltung zugeführt wird, eine erste Subtrahierschaltung (43), die das Ausgangssignal der ersten Addierschaltung von einem Ausgangssignal der ersten Verzögerungsschaltung subtrahiert, und einen zweiten Koeffizientenmultiplikator (52) aufweist, dem ein Ausgangssignal der ersten Subtrahierschaltung zugeführt wird und der sein Ausgangssignal der ersten Addierschaltung zuführt, daß das zweite Bandpaßfilter (40b1) einen dritten Koeffizientenmultiplikator (53), dem das Ausgangssignal des Farbstreifenfilters zugeführt wird, eine zweite Addierschaltung (54), der ein Ausgangssignal des dritten Koeffizientenmultiplikators zugeführt wird, eine zweite Verzögerungsschaltung (42), der ein Ausgangssignal der zweiten Addierschaltung zugeführt wird, eine zweite Subtrahierschaltung (44), die das Ausgangssignal der zweiten Addierschaltung von einem Ausgangssignal der zweiten Verzögerungsschaltung subtrahiert, und einen vierten Koeffizientenmultiplikator (55) aufweist, dem ein Ausgangssignal der zweiten Subtrahierschaltung zugeführt wird und der sein Ausgangssignal der zweiten Addierschaltung zuführt, wobei die Ausgangssignale der ersten und zweiten Subtrahierschaltung dem Addierer (45) als die Ausgangssignale des ersten und zweiten Bandpaßfilters zugeführt werden und wobei die erste und zweite Verzögerungszeit der ersten und zweiten Verzögerungsschaltung so eingestellt sind, daß die erste und zweite Subtrahierschaltung eine Subtraktion zwischen Signalen ausführen, die eine Phasendifferenz von angenähert 180° aufweisen.

7. Farbbildaufnahmeeinrichtung nach Anspruch 6, **dadurch gekennzeichnet,**

daß jede Streifengruppe des Farbstreifenfilters einen grünen Streifen, einen Zyanstreifen und einen transparenten Streifen umfaßt, daß die Bildaufnahmeröhre angenähert vier Abtastzeilen jeweils für eine Streifengruppe aufweist, daß die erste Verzögerungszeit auf zwei Abtastzeilen eingestellt ist und daß die zweite Verzögerungszeit auf eine Abtastzeile eingestellt ist.

8. Farbbildaufnahmeeinrichtung nach Anspruch 1, **dadurch gekennzeichnet,** daß jede Streifengruppe des Farbstreifenfilters einen grünen Streifen, einen Zyanstreifen und einen transparenten Streifen umfaßt.

9. Farbbildaufnahmeeinrichtung nach Anspruch 8, **dadurch gekennzeichnet,** daß die Bildaufnahmeröhre angenähert vier Abtastzeilen jeweils für eine Streifengruppe aufweist.

10. Farbbildaufnahmeeinrichtung nach Anspruch 1, **dadurch gekennzeichnet,** daß die Einrichtung zur Gewinnung des Farbmultiplexsignals einen Analog/Digital-Wandler (13), der das über die Filterschaltung gelieferte Ausgangssignal der Bildaufnahmeröhre einer Analog/Digital-Umsetzung unterwirft, eine Speichervorrichtung (14a, 14b) zum darin Einschreiben eines Ausgangssignals des Analog/Digital-Wandlers in einer Folge von in der Abtastrichtung angeordneter Daten für eine jede Streifengruppe und zum daraus Auslesen des gespeicherten Signals in einer Folge von in einer Richtung senkrecht zur Abtastrichtung angeordneter Daten für eine jede Streifengruppe und einen Digital/Analog-Wandler (16) aufweist, der ein Ausgangssignal der Speichervorrichtung einer Digital/ Analog-Umsetzung unterzieht, um so das Farbmultiplexsignal zu erzeugen.

11. Farbbildaufnahmeeinrichtung nach Anspruch 1, **dadurch gekennzeichnet,** daß ferner eine Farbdemodulationsvorrichtung (17) vorgesehen ist, die ein farbdemoduliertes Signal erzeugt, indem sie das Farbmultiplexsignal einer Farbdemodulation unterzieht.

12. Farbbildaufnahmeeinrichtung nach Anspruch 11, **dadurch gekennzeichnet,** daß die Farbdemodulationsvorrichtung eine Farbdemodulationsschaltung aufweist, die ein Stufenenergiesystem verwendet.

# FIG. 1

12 AMP
13 A/D CONV
14a MEM
14b MEM
15 SW
16 D/A CONV
17 COLOR DEMOD
18
19 ADD
20
11a  11

# FIG. 2

11a  α11 α12 α13
α21 α22 α23
L

P1
G
C  α31 α32 α33
α41 α42 α43
W  α51 α52 α53

P2
G  α71 α72 α73  α61 α62 α63
C

# FIG. 3A

α11 α12 α13
α21 α22 α23
α31 α32 α33
α41 α42 α43
α51 α52 α53
α61 α62 α63

# FIG. 3B

α71 α72 α73
α181 α182 α183
α191 α192 α193

FIG. 4A

FIG. 4B

FIG. 7

# FIG. 5

# FIG. 6

(A) LNSa

(B) LNSb

(C) $\overline{WE}a$

(D) $\overline{WE}b$

TIME

# FIG.8

MEM 14a

12 AMP — 40 FILT — 13 A/D CONV — MEM — 16 D/A CONV — 17 COLOR DEMOD — 18

11a 11

15 SW — MEM 14b

# FIG.9A

① ②

# FIG.9B

11a

G — La
C
W
G

# FIG.10

40a BPF — 40

39

2 LINE DELAY 41 — 43 + SUB — S1

45 — 46 ADD

1 LINE DELAY 42 — 44 + SUB — S2

40b BPF

# FIG.11

LEVEL

1.0 0.98    1.0 0.98

I

II

IIf

IIIh

III

f₁ f₁a    f₂ f₂a

FREQUENCY

# FIG.12A

LEVEL

I

IIfa    II    IIIha    III

f₁    f₂

FREQUENCY

# FIG.12B

LEVEL

I    II    III

IIIfb    IIIhb

f₁    f₂

FREQUENCY

# FIG.13